(19) Europäisches Patentamt
European Patent Office
Office européen des brevets

(11) **EP 2 194 727 A1**

(12) **EUROPEAN PATENT APPLICATION**

(43) Date of publication:
**09.06.2010 Bulletin 2010/23**

(51) Int Cl.:
***H04N 13/04*** *(2006.01)*

(21) Application number: **09175805.2**

(22) Date of filing: **12.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **03.12.2008 KR 20080121760**

(71) Applicant: **Samsung Electronics Co., Ltd.**
**Suwon-si,**
**Gyeonggi-do 442-742 (KR)**

(72) Inventors:
• **Kwak, Young Shin**
**443-706, Gyeonggi-do (KR)**
• **Jeong, Young Ju**
**151-775, Seoul (KR)**
• **Park, Du-Sik**
**443-470, Gyeonggi-do (KR)**

(74) Representative: **D'Halleweyn, Nele Veerle Trees Gertrudis**
**Arnold & Siedsma**
**Sweelinckplein 1**
**2517 GK Den Haag (NL)**

(54) **Apparatus and method for compensating for crosstalk between views in three dimensional (3D) display apparatus**

(57) Provided are a method and apparatus for compensating for a crosstalk (ghost effect) between views in a three-dimensional (3D) display apparatus. The method and the apparatus may pre-set a crosstalk weight matrix through an actual measurement by considering a characteristic of a display. The crosstalk weight matrix may offset an effect that each of multiple views affects other different views. Also, when multi-view input signals are received, the method may generate luminance-compensated multi-view input signals by multiplying the crosstalk weight matrix and a luminance matrix that includes a luminance of each of the multi-view input signals, and may output the luminance compensated multi-view input signals as input signals of the display.

**FIG. 1**

## Description

One or more exemplary embodiments relate to a method and apparatus for compensating for a crosstalk between views in a three-dimensional (3D) display apparatus, and more particularly, to a method and apparatus for compensating for a crosstalk between views that may multiply multi-view input signals by a crosstalk weight matrix that offsets an effect that each of multiple views affects other different views.

Generally, a scheme of using a binocular visual disparity may be used to embody a three-dimensional (3D) image. The above scheme may be classified into a stereoscopy scheme or an autostereoscopy scheme depending on wearing of glasses. The stereoscopy scheme may use polarized glasses, liquid crystal shutter glasses, and the like. Also, the autostereoscopy scheme may use a lenticular lens, a parallax barrier, a parallax illumination, and the like.

Generally, the stereoscopy scheme uses a polarized projector and thus may be applicable to a place, for example, a theater where many people can simultaneously view a movie, and the like. Also, the autostereoscopy scheme may be applicable to a game display, a television (TV), an exhibition display, and the like that an individual or a small number of people generally use.

Both the stereoscopy scheme using polarized glasses and the autostereoscopy scheme using a lenticular lens may correspond to a multi-view display apparatus, such as a 3D display apparatus that may generate a 3D effect by transmitting two-dimensional (2D) images with different points of views to both eyes of an observer. When a 3D image is generated by emitting the 2D images with the different points of views to both eyes of the observer, a crosstalk that is an overlapping of images transmitted to both eyes may occur.

When the crosstalk occurs in the 3D display apparatus, the 2D images transmitted to the eyes may look overlapped, which results in deteriorating a 3D effect and causing a visual fatigue. Specifically, according to the crosstalk, there is some constraint on a depth that may be expressed via a display without causing a quality deterioration.

Accordingly, there is a need for a method and apparatus that may compensate for an image overlapping phenomenon caused by a crosstalk in a 3D display apparatus.

An aspect of one or more exemplary embodiments may provide a method and apparatus that may compensate for a crosstalk between views in a three-dimensional (3D) display apparatus.

Another aspect of one or more exemplary embodiments may also provide a method and apparatus that may multiply multi-view input signals by a crosstalk weight matrix and thereby may compensate for a crosstalk between views. Here, the crosstalk weight matrix may offset an effect that each of multiple views affects other different views.

According to an aspect of one or more embodiments, there may be provided a method of compensating for a crosstalk between views in a 3D display apparatus, the method including: receiving multi-view input signals; multiplying a crosstalk weight matrix and a luminance matrix to generate luminance-compensated multi-view input signals, wherein the crosstalk weight matrix offsets an effect that each of multiple views affects other different views and the luminance matrix includes a luminance of each of the multi-view input signals; and outputting the luminance-compensated multi-view input signals as input signals of a display included in the 3D display apparatus.

In this instance, prior to the generating, the method may further include converting the multi-view input signals to luminance-linear signals that have a linear relationship with the luminance.

Also, prior to the generating, the method may further include adding a predetermined black level value to the luminance of each of the multi-view input signals.

Also, the crosstalk weight matrix may be expressed by an inverse matrix of a matrix that indicates a level of the effect that each of the multiple views affects the other different views.

Also, the crosstalk weight matrix may be preset through an actual measurement based on a characteristic of the display.

According to another aspect of one or more exemplary embodiments, there may be provided an apparatus for compensating for a crosstalk between views in a 3D display apparatus, the apparatus including: a receiver to receive multi-view input signals; and a signal combination unit to multiply a crosstalk weight matrix and a luminance matrix to thereby generate luminance-compensated multi-view input signals and to output luminance-compensated multi-view input signals to a display included in the 3D display apparatus, wherein the crosstalk weight matrix offsets an effect that each of multiple views affects other different views and the luminance matrix includes a luminance of each of the multi-view input signals.

In this instance, the crosstalk weight matrix may be expressed by an inverse matrix of a matrix that indicates a level of the effect that each of the multiple views affects the other different views.

Also, the crosstalk weight matrix is preset through an actual measurement based on a characteristic of the display included in the 3D display apparatus.

According to still another aspect of one or more exemplary embodiments, there may be provided an apparatus for compensating for a crosstalk between views in a 3D display apparatus, the apparatus including: a receiver to receive multi-view input signals; a linear converter to convert the multi-view input signals to luminance-linear signals that have a linear relationship with the luminance; and a signal combination unit to multiply a crosstalk weight matrix and a luminance matrix to thereby generate luminance-compensated multi-view input signals and to output luminance-compensated multi-view input signals to a display included in the 3D display apparatus, wherein the crosstalk weight matrix offsets an effect that each of multiple views affects other different views and the luminance matrix includes a luminance of each of the linear-converted multi-view input signals.

In this instance, the apparatus may further include a black level adjustment unit to add a predetermined black level value to the luminance of each of the linear-converted multi-view input signals to thereby provide the result of the addition for the signal combination unit.

Also, the crosstalk weight matrix may be expressed by an inverse matrix of a matrix that indicates a level of the effect that each of the multiple views affects the other different views.

Also, the crosstalk weight matrix may be preset through an actual measurement based on a characteristic of the display included in the 3D display apparatus.

Additional aspects of exemplary embodiments will be set forth in part in the description which follows and, in part, will be apparent from the description, or may be learned by practice of the disclosure.

BRIEF DESCRIPTION OF THE DRAWINGS

These and/or other aspects will become apparent and more readily appreciated from the following description of exemplary embodiments, taken in conjunction with the accompanying drawings of which:

FIG. 1 is a block diagram illustrating an example of an apparatus for compensating for a crosstalk between views in a three-dimensional (3D) display apparatus according to an exemplary embodiment;
FIG. 2 is a block diagram illustrating an example of an apparatus for compensating for a crosstalk between views in a 3D display apparatus according to another exemplary embodiment; and
FIG. 3 is a flowchart illustrating a method of compensating for a crosstalk between views in a 3D display apparatus according to an exemplary embodiment.

DETAILED DESCRIPTION

Reference will now be made in detail to exemplary embodiments, examples of which are illustrated in the accompanying drawings, wherein like reference numerals refer to the like elements throughout. Exemplary embodiments are described below to explain the present disclosure by referring to the figures.

For a crosstalk compensation, it is possible to use a scheme of adding a predetermined gray value to each of input images and then subtracting, from each image for each pixel, a luminance value to be added by another image. For example, in the case of an image that is transmitted to a left eye, a compensated luminance value may be given by,

[Equation 1]

$$I'L = IL - a \cdot IR + K,$$

where I'L denotes a compensated luminance with respect to a left image, IL denotes a luminance of the received left image, IR denotes a luminance of the received right image, a denotes a weight to determine an amount of incident light from a right image, and K denotes a luminance value to be entirely added to the left image and the right image.

However, when an actual image is displayed after the crosstalk compensation is performed for the left image and the right image, luminance information I"L that is generated by a crosstalk may be expressed by the following Equation 2. Specifically, a relative importance of K may increase in comparison to IL + K and thus a saturation of the entire image may be deteriorated. The luminance information I"L may be given by,

[Equation 2]

$$I"L = I'L + a \cdot I'R = IL - a \cdot IR + K + a \cdot (IR - a \cdot IL + K) = (1 - a2)IL + (1 + a)K,$$

wherein I"L denotes the luminance information generated by the crosstalk when the actual image is displayed after the crosstalk compensation is performed for the left image and the right image, I'L denotes a compensated luminance with respect to the left image, I'R denotes a compensated luminance with respect to the right image, IL denotes the luminance of the left image, IR denotes the luminance of the right image, a denotes the weight to determine an amount of incident light from the right image, and K denotes the luminance value to be entirely added to the left image and the right image.

In the case of a multi-view display apparatus to output at least two images for a 3D image, when expansively applying the above Equation 1, a saturation deterioration may occur as predicted in the above Equation 2.

In the 3D display apparatus to provide the 3D image using multiple views, when a luminance of an input signal of each of the multiple views is $I_1$, $I_2$ ... $I_n$... $I_N$, and an actually measured output luminance by a crosstalk between views is $I'_1$, $I'_2$...$I'_n$...$I'_N$, for example, I'n corresponding to an output luminance of an $n^{th}$ image may be expressed by a combination of weights of input images, as given by,

[Equation 3]

$$I'_n = a_1 \cdot I_1 + a_2 \cdot I_2 + ... + a_n \cdot I_n + ... + a_N \cdot I_N,$$

where each of $a_1$ through $a_N$ denotes a level of an effect that each input image affects the output luminance I'n. For example, when $a_n$ is 0.7, it may indicate that only 70% of the $n^{th}$ image is output as an $n^{th}$ view and the remaining 30% of the $n^{th}$ image corresponds to a light from other views. Here, a total sum of $a_1$ through $a_N$ may become '1'.

Through the above scheme, a relationship between an input of a display and an output luminance in all the views may be expressed using a crosstalk matrix C, as given by,

[Equation 4]

$$A' = C \cdot A \ -> \ A = C^{-1} \cdot A',$$

where A denotes a matrix that indicates a luminance of multiple views to be output, A' denotes a matrix that indicates a luminance of multiple views actually output via the display, C denotes the crosstalk matrix that indicates the level of the effect that each of the multiple views affects the other different views, and $C^{-1}$ denotes an inverse matrix of the crosstalk matrix.

When using the relationship expressed by the above Equation 4, it is possible to determine how to adjust an input value in order to obtain a desired output luminance in all the views using the inverse matrix of the crosstalk matrix C.

Specifically, compensated multi-view signals may be generated by multiplying a crosstalk weight matrix corresponding to the inverse matrix of the crosstalk matrix by input signals that are required to output the luminance $I_1$, $I_2$ ... $I_n$... $I_N$ via the display. The compensated multi-view signals may be provided to the 3D display. Through this, it is possible to compensate for an output of the display.

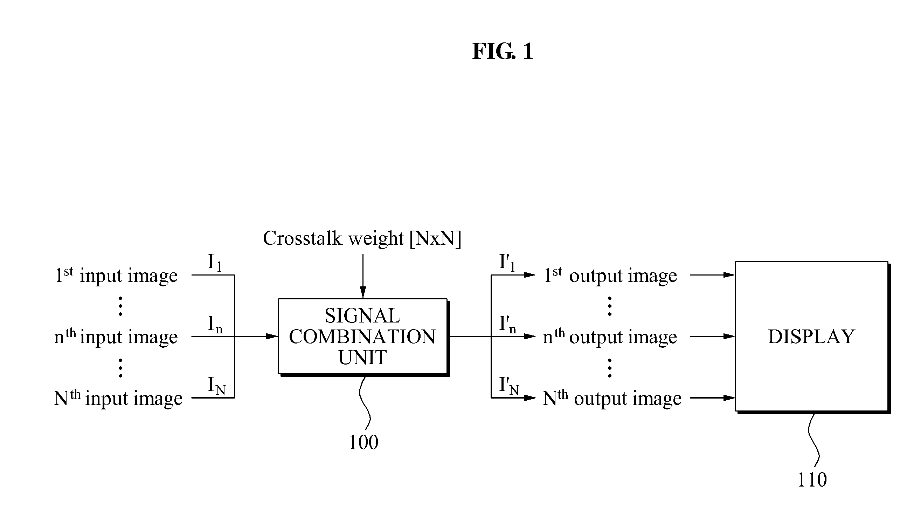

FIG. 1 is a block diagram illustrating an example of an apparatus for compensating for a crosstalk between views in a 3D display apparatus according to an exemplary embodiment.

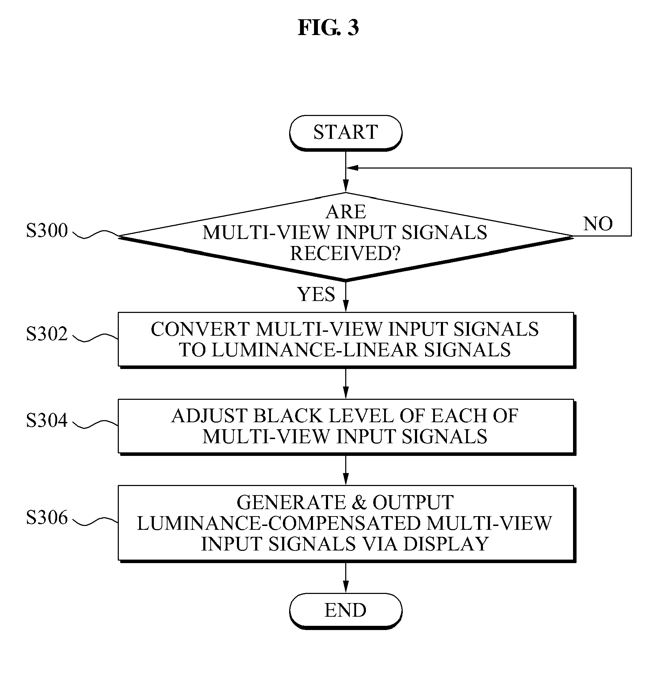

Referring to FIG. 3, the 3D display apparatus may include a receiver (not shown), a signal combination unit 100, and a display 110.

The receiver may receive multi-view input signals. Here, the multi-view input signals denote a plurality of image signals that are expressed as different views.

The signal combination unit 100 may generate luminance-compensated multi-view input signals by multiplying a crosstalk weight matrix and a luminance matrix that includes a luminance of each of the multi-view input signals, and provide the luminance-compensated multi-view input signals as input signals of the display 110. Here, the crosstalk weight matrix corresponds to an inverse matrix of a crosstalk matrix that indicates a level of the effect that each of the multiple views affects the other different views. The crosstalk weight matrix may be pre-measured through an actual measurement by considering a characteristic of the display 110.

The display 110 may output the provided luminance-compensated multi-view input signals to thereby provide a luminance-compensated 3D image for a user.

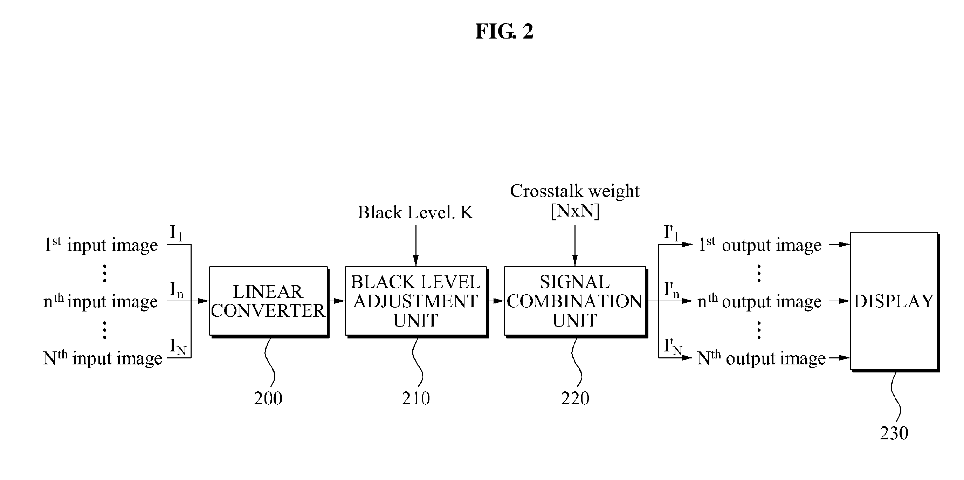

FIG. 2 is a block diagram illustrating an example of an apparatus for compensating for a crosstalk between views in a 3D display apparatus according to another exemplary embodiment.

Referring to FIG. 2, the 3D display apparatus may include a receiver (not shown), a linear converter 200, a black level adjustment unit 210, a signal combination unit 220, and a display 230.

The receiver may receive multi-view input signals. Here, the multi-view input signals denote a plurality of image signals that are expressed as different views.

The linear converter 200 may convert the multi-view input signals, received via a reception end, to luminance-linear signals. The luminance-linear signals denote signals that have a linear relationship with a luminance. For example, when a received multi-view input signal is a red-green-blue (RGB) signal, the multi-view input signal may be converted to a linear RGB signal that has the linear relationship with the luminance. In addition to the RBG signal, a YCbCr signal may be used as an input signal. When the YCbCr signal is input, the linear converter 200 may also convert the YCbCr signal to the luminance-linear signal like the linear RGB signal.

The black level adjustment unit 210 may add a predetermined black level value to the luminance of the linear-converted multi-view input signals and provide the result of the addition for the signal combination unit 220.

When the crosstalk compensation is performed, an output value less than zero may be calculated. In this instance, since an actual image is represented as a zero value, a compensation may not be performed. For example, in the case of a white object that looks protruded in comparison to a black background, it may be impossible to perform the compensation with respect to a region where the white object looks overlapped due to a crosstalk. Accordingly, the compensation may be performed by adding the black level value to the luminance of each of the multi-view input signals in a front end of the signal combination unit 220, using the black level adjustment unit 210. Here, the black level value may be determined based on a case where the white object is overlapped on the black background.

The signal combination unit 220 may generate luminance-compensated multi-view input signals by multiplying a crosstalk weight matrix and a luminance matrix, and provide the generated luminance-compensated multi-view input signals as input signals of the display 230. Here, the crosstalk weight matrix corresponds to an inverse matrix of a crosstalk matrix that indicates a level of the effect that each of the multiple views affects the other different views. The crosstalk weight matrix may be pre-measured through an actual measurement by considering a characteristic of the display 230.

The display 230 may output the provided luminance-compensated multi-view input signals to thereby provide a luminance-compensated 3D image for a user.

Hereinafter, a method of compensating for a crosstalk between views in a 3D display apparatus will be described with reference to FIG. 3. FIG. 3 is a flowchart illustrating a method of compensating for a crosstalk between views in a 3D display apparatus according to an exemplary embodiment.

Referring to FIG. 3, an apparatus for compensating for the crosstalk between views in the 3D display apparatus may determine whether multi-view input signals are received in operation S300. When the multi-view input signals are received in operation S300, the apparatus may convert the multi-view input signals to luminance-linear signals in operation S302. In operation S304, the apparatus may add a predetermined black level value to a luminance of each of the multi-view input signals.

In operation S306, the apparatus may generate luminance-compensated multi-view input signals by multiplying a crosstalk weight matrix and a luminance matrix, and output the luminance-compensated multi-view input signals as input signals of a display. The crosstalk weight matrix may offset an effect that each of multiple views affects other different views and the luminance matrix may include the luminance of each of the multi-view input signals.

Here, the crosstalk weight matrix corresponds to an inverse matrix of a crosstalk matrix that indicates a level of the effect that each of the multiple views affects the other different views. The crosstalk weight matrix may be pre-measured through an actual measurement by considering a characteristic of a display included in the 3D apparatus.

According to one or more exemplary embodiments, there may be provided an apparatus and method that may multiply multi-view input signals and a crosstalk weight matrix that offsets an effect that each of multiple views affects other different views, and thereby may compensate for a crosstalk between views. Through this, it is possible to compensate for an image overlapping phenomenon caused by the crosstalk.

The above-described exemplary embodiments may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA). Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Although a few exemplary embodiments have been shown and described, it would be appreciated by those skilled in the art that changes may be made in these exemplary embodiments without departing from the principles and spirit of the disclosure, the scope of which is defined by the claims and their equivalents.

**Claims**

1. A method of compensating for a crosstalk between views in a three dimensional (3D) display apparatus, the method comprising:

   receiving multi-view input signals;
   multiplying a crosstalk weight matrix and a luminance matrix to generate luminance-compensated multi-view input signals, wherein the crosstalk weight matrix offsets an effect that each of multiple views affects other different views and the luminance matrix includes a luminance of each of the multi-view input signals; and
   outputting the luminance-compensated multi-view input signals as input signals of a display included in the 3D display apparatus (S306).

2. The method of claim 1, prior to the generating, further comprising:

   converting the multi-view input signals to luminance-linear signals that have a linear relationship with the luminance (S302).

3. The method of claim 1 or 2, prior to the generating, further comprising:

   adding a predetermined black level value to the luminance of each of the multi-view input signals.

4. The method of any of the previous claims, wherein the crosstalk weight matrix is expressed by an inverse matrix of a matrix that indicates a level of the effect that each of the multiple views affects the other different views.

5. The method of any of the previous claims, wherein the crosstalk weight matrix is preset through an actual measurement based on a characteristic of the display.

6. An apparatus for compensating for a crosstalk between views in a 3D display (110); (230) apparatus, the apparatus comprising:

   a receiver adapted to receive multi-view input signals; and
   a signal combination unit (100); (220) adapted to multiply a crosstalk weight matrix and a luminance matrix to thereby generate luminance-compensated multi-view input signals and to output luminance-compensated multi-view input signals to a display included in the 3D display apparatus,

   wherein the crosstalk weight matrix offsets an effect that each of multiple views affects other different views and the luminance matrix includes a luminance of each of the multi-view input signals.

7. The apparatus of claim 6, wherein the crosstalk weight matrix is expressed by an inverse matrix of a matrix that indicates a level of the effect that each of the multiple views affects the other different views.

8. The apparatus of claim 6 or 7, wherein the crosstalk weight matrix is preset through an actual measurement based on a characteristic of the display included in the 3D display apparatus.

9. An apparatus of any of the claims 6-8, the apparatus further comprising:

   a linear converter (200) adapted to convert the multi-view input signals to luminance-linear signals that have a linear relationship with the luminance; and

   wherein the luminance matrix includes a luminance of each of the linear-converted multi-view input signals.

10. The apparatus of claim 9, further comprising:

    a black level adjustment unit (240) adapted to add a predetermined black level value to the luminance of each of the linear-converted multi-view input signals to thereby provide the result of the addition for the signal combination unit.

## FIG. 1

EP 2 194 727 A1

**FIG. 2**

1st input image $I_1$ ... nth input image $I_n$ ... $N^{th}$ input image $I_N$ → **LINEAR CONVERTER** (200) → **BLACK LEVEL ADJUSTMENT UNIT** (210) ← Black Level. K → **SIGNAL COMBINATION UNIT** (220) ← Crosstalk weight [NxN] → $I'_1$ 1st output image ... $I'_n$ nth output image ... $I'_N$ $N^{th}$ output image → **DISPLAY** (230)

**FIG. 3**

S300 — ARE MULTI-VIEW INPUT SIGNALS RECEIVED? — NO

YES

S302 — CONVERT MULTI-VIEW INPUT SIGNALS TO LUMINANCE-LINEAR SIGNALS

S304 — ADJUST BLACK LEVEL OF EACH OF MULTI-VIEW INPUT SIGNALS

S306 — GENERATE & OUTPUT LUMINANCE-COMPENSATED MULTI-VIEW INPUT SIGNALS VIA DISPLAY

START

END

Europäisches
Patentamt

European
Patent Office

Office européen
des brevets

# EUROPEAN SEARCH REPORT

**Application Number**

EP 09 17 5805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/268104 A1 (COWAN MATT [CA] ET AL) 30 November 2006 (2006-11-30) * abstract * * paragraphs [0048] - [0050]; figure 4 * * paragraphs [0054], [0057] - [0065] * * paragraphs [0067] - [0068]; figure 5 * * paragraphs [0085] - [0088]; figure 14 * ----- | 1-10 | INV. H04N13/04 |
| X | WO 01/69944 A2 (POINT LAB RES INC [CA]; GURALNICK BRIAN [CA]) 20 September 2001 (2001-09-20) * the whole document * ----- | 1-10 | |
| | | | **TECHNICAL FIELDS SEARCHED (IPC)** H04N |

The present search report has been drawn up for all claims

| Place of search | Date of completion of the search | Examiner |
|---|---|---|
| The Hague | 14 December 2009 | Mao, Pauline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 09 17 5805

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2009

| Patent document cited in search report | | Publication date | Patent family member(s) | | Publication date |
|---|---|---|---|---|---|
| US 2006268104 | A1 | 30-11-2006 | US | 2007188602 A1 | 16-08-2007 |
| WO 0169944 | A2 | 20-09-2001 | AU | 3908101 A | 24-09-2001 |
| | | | CA | 2479063 A1 | 20-09-2001 |
| | | | US | 6532008 B1 | 11-03-2003 |

EPO FORM P0459

For more details about this annex : see Official Journal of the European Patent Office, No. 12/82